# EUROPÄISCHE PATENTANMELDUNG

(11) **EP 4 431 386 A1**
(43) Veröffentlichungstag der Anmeldung: **18.09.2024**
(21) Anmeldenummer: 23162384.4
(22) Anmeldetag: 16.03.2023
(51) Int. Cl.: B64C 11/10, B64C 11/28

(54) **ROTORNABE FÜR LUFTFAHRZEUGE MIT PROPELLERANTRIEB SOWIE BAUGRUPPE MIT EINER DERARTIGEN ROTORNABE**

(71) Anmelder: maxon international ag, 6072 Sachseln (CH)
(72) Erfinder: LÖSKOW, Luise, 6055 Alpnach Dorf (DE); SICHER, Marco, 6375 Beckenried (CH); MEIER, Roman, 6034 Inwil (CH)
(74) Vertreter: Grünecker Patent- und Rechtsanwälte PartG mbB

(57) **Zusammenfassung**

Die Erfindung betrifft eine Rotornabe, insbesondere für Luftfahrzeuge mit Propellerantrieb, aufweisend eine Bohrung zur Aufnahme einer Antriebswelle, wobei die Bohrung ein Innengewinde umfasst, das eingerichtet ist, mit einem Außengewinde der Antriebswelle zusammenzuwirken und die Rotornabe lösbar mit der Antriebswelle zu verbinden. Erfindungsgemäß ist vorgesehen, dass die Bohrung eine Ringnut aufweist zur Aufnahme eines O-Rings, der geeignet ist, eine Relativbewegung zwischen der Rotornabe und der Antriebswelle zu hemmen.

## Beschreibung

Die vorliegende Erfindung betrifft eine Rotornabe nach dem Oberbegriff des unabhängigen Anspruchs 1.

Eine gattungsgemäße Rotornabe weist eine Bohrung zur Aufnahme einer Antriebswelle auf, wobei die Bohrung ein Innengewinde umfasst, das eingerichtet ist, mit einem Außengewinde der Antriebswelle zusammenzuwirken und die Rotornabe lösbar mit der Antriebswelle zu verbinden.

Gattungsgemäße Rotornaben werden vor allem im Bereich der unbemannten Luftfahrzeuge eingesetzt. Die Verbindung der Rotornabe mit dem Antriebssystem ist ein wichtiger Aspekt und kann grundsätzlich lösbar oder nicht lösbar ausgeführt sein. Bei lösbaren Verbindungen kann beispielsweise die Rotornabe durch ein zentrales Gewinde direkt auf der Antriebswelle befestigt werden. Üblicherweise ist die Gewinderichtung dabei derart ausgelegt, dass die Rotornabe beim Beschleunigungsvorgang der Antriebswelle festgezogen und somit der Kraftschluss zwischen Antriebswelle und Rotornabe unterstützt wird. Alternativ können lösbare und sich im Rotorbetrieb festziehende Verbindungen durch Befestigungselemente in Gestalt von zwei- oder dreidimensionalen Formen, die komplementär an Rotornabe und Welle ausgeführt sind und über eine geeignete Passverbindung zusammenwirken, realisiert werden.

Eine Rotornabe nach dem Oberbegriff des unabhängigen Anspruchs 1 ist aus DE202014010962 bekannt. Dieses Dokument beschreibt verschiedene Ausführungsformen der Befestigung von einer Rotornabe mit einer Antriebswelle.

Die aus dem Stand der Technik bekannten Arten der Befestigung sind jedoch nicht optimal, da die Befestigung der Rotornabe auf der Welle zwar als im Betrieb selbst festziehend ausgelegt ist, sich derartige Verbindungen dagegen ohne weitere Sicherheitsmerkmale durch äußere Einflüsse, wie Vibrationen oder abrupte Laständerungen, lösen können und dadurch die Funktionssicherheit des Antriebs gefährdet ist.

Aufgabe der vorliegenden Erfindung ist es daher, eine Rotornabe bereitzustellen, die sich bei gleichbleibend kompakter Bauweise durch eine erhöhte Betriebssicherheit auszeichnet.

Die Aufgabe wird gelöst durch die Merkmale des unabhängigen Anspruchs 1. Demnach liegt dann eine erfindungsgemäße Lösung der Aufgabe vor, wenn die Bohrung eine Ringnut aufweist zur Aufnahme eines O-Rings, der geeignet ist, die Relativbewegung zwischen der Rotornabe und der Antriebswelle zu hemmen.

Vorteilhafte Ausgestaltungen der vorliegenden Erfindung sind Gegenstand der Unteransprüche.

Die Erfindung ist vor allem für den Bereich von propellerbetriebenen unbemannten Flugobjekten relevant. Dazu zählen beispielsweise Drohnen mit einer waagerechten Anordnung der Propeller, aber auch Flächenflugzeuge mit vertikal ausgerichtetem Propeller.

Gemäß einer vorteilhaften Ausführung der vorliegenden Erfindung weist die Bohrung einen ersten Bohrungsabschnitt auf, wobei der erste Bohrungsabschnitt die Ringnut umfasst, und die Bohrung weist einen zweiten Bohrungsabschnitt auf, wobei der zweite Bohrungsabschnitt das Innengewinde umfasst und wobei der Innendurchmesser des ersten Bohrungsabschnitts größer ist als der Nenndurchmesser des Innengewindes. Die Auslegung der Durchmesser der Bohrungsabschnitte ist davon abhängig, wie die beiden Bohrungsabschnitte relativ zu einer Einschraubrichtung angeordnet sind. Denkbar ist daher auch, dass der Nenndurchmesser des Innengewindes größer ist als der Durchmesser des die Ringnut umfassenden ersten Bohrungsabschnitts.

Gemäß einer weiteren vorteilhaften Ausführung der vorliegenden Erfindung sind die Ringnut und das Innengewinde in axialer Richtung beabstandet voneinander ausgeführt. Vorteilhafterweise ist die Ringnut also nicht innerhalb des Innengewindes angeordnet. Es sind jedoch auch Ausführungen denkbar, bei denen die Ringnut und ein innerhalb der Ringnut angeordneter O-Ring im Bereich des Innengewindes angeordnet sind.

Gemäß einer weiteren vorteilhaften Ausführung der vorliegenden Erfindung weist die Bohrung eine Einschraubrichtung auf und die Ringnut ist in Einschraubrichtung vor dem Innengewinde angeordnet. Diese Anordnung bietet den Vorteil, dass innerhalb des die Ringnut umfassenden ersten Bohrungsabschnitts ein Zentriermittel vorgesehen sein kann, das den Prozessschritt des Einschraubens vereinfacht.

Gemäß einer weiteren vorteilhaften Ausführung der vorliegenden Erfindung ist die Rotornabe eine Propellernabe und weist zumindest ein Aufnahmeelement zur Befestigung eines Rotorblatts auf. Die Rotornabe kann jedoch auch zwei, drei oder noch mehr Aufnahmeelemente für ein Rotorblatt aufweisen, je nach Art des auszurüstenden Flugobjekts und je nach benötigter Anzahl von Rotorblättern.

Gemäß einer besonders vorteilhaften Ausführung der vorliegenden Erfindung ist die Rotornabe Teil einer Baugruppe, umfassend einen O-Ring, wobei der O-Ring in der Ringnut angeordnet ist, eine Antriebswelle, wobei die Antriebswelle eine Antriebswellenachse und ein Außengewinde aufweist, das eingerichtet ist, mit dem Innengewinde der Rotornabe zusammenzuwirken und die Antriebswelle mit der Rotornabe lösbar zu verbinden.

Gemäß einer weiteren vorteilhaften Ausführung der vorliegenden Erfindung weist die Ringnut der Rotornabe eine Breite und eine Tiefe auf und ist der O-Ring derart ausgelegt und in der Ringnut positioniert, im verbauten Zustand die Rotornabe und die Antriebswelle reibschlüssig in Kontakt zu bringen.

Der Vorteil der erfindungsgemäßen Rotornabe zeigt sich vor allem in einem Verbau mit einem O-Ring und einer Antriebswelle. Durch die Position des O-Rings in der Ringnut und durch dessen entsprechende Dimensionierung befindet sich der O-Ring im verbauten Zustand von Antriebswelle und Rotornabe in reibschlüssigem Kontakt mit der Antriebswelle und in formschlüssigem Kontakt mit der Rotornabe. Der reibschlüssige Kontakt des O-Rings mit der Antriebswelle sorgt dafür, dass die Relativbewegung zwischen Rotornabe und Antriebswelle gehemmt wird. Der Vorteil an der Nutzung eines O-Rings liegt darin, dass der O-Ring die Relativbewegungen zwischen der Rotornabe und der Antriebswelle in allen Betriebszuständen hemmt, die Relativbewegungen jedoch nicht begrenzt bzw. verhindert. Darüber hinaus können Montage und Demontage von Rotornabe und Antriebswelle auch im verbauten Zustand des O-Rings erfolgen.

Gemäß einer weiteren vorteilhaften Ausführung der vorliegenden Erfindung umfasst die Antriebswelle einen Funktionsabschnitt, der mit dem ersten Bohrungsabschnitt der Rotornabe eine Spielpassung bildet. Die Spielpassung zwischen dem ersten Bohrungsabschnitt der Rotornabe und dem Funktionsabschnitt der Antriebswelle sorgt für eine saubere Zentrierung und Ausrichtung der Antriebswelle mit der Rotornabe bei der Verschraubung. Dadurch können Unwuchten minimiert und ein ruhiger Betrieb der Baugruppe gewährleistet werden.

Gemäß einer weiteren vorteilhaften Ausführung der vorliegenden Erfindung weist die Rotornabe eine Rotorachse und eine dem angetriebenen Zustand entsprechende Rotornabendrehrichtung auf und ist die Gewinderichtung von Rotornabe und Antriebswelle derart ausgelegt, dass bei einer Beschleunigung durch ein Antriebssystem in die Rotornabendrehrichtung die Rotornabe auf der Antriebswelle festgezogen wird.

Gemäß einer weiteren vorteilhaften Ausführung der vorliegenden Erfindung besteht der O-Ring aus einem Polymer. Der Vorteil eines Polymers besteht darin, dass das Material flexibel und deformierbar ist. Der O-Ring ist in der Ringnut der Rotornabe angeordnet und eingerichtet die Relativbewegungen zwischen Rotornabe und Antriebswelle zu hemmen. Dazu ist ein reibschlüssiger Kontakt des O-Rings mit der Antriebswelle notwendig. Der O-Ring und die Ringnut sind vorteilhafterweise also derart dimensioniert, dass der O-Ring in radialer Richtung eine größere Ausdehnung aufweist als die Ringnut. Die Breite der Ringnut, also die Ausdehnung in axialer Richtung, sollte jedoch größer sein als die Breite des O-Rings. Beim Verschrauben der Antriebswelle in der Rotornabe, presst die Antriebswelle den O-Ring radial nach außen, wobei der O-Ring deformiert wird und sich das Material des O-Rings in Richtung der Breite der Ringnut ausdehnt. Der O-Ring ist also formschlüssig mit der Rotornabe und reibschlüssig mit der Antriebswelle verbunden.

Gemäß einer besonders vorteilhaften Ausführung der vorliegenden Erfindung umfasst die Baugruppe zumindest ein Rotorblatt, das drehbar um eine Rotorblattachse im Aufnahmeelement gelagert ist, wobei die Rotorblattachse im Wesentlichen parallel zur Antriebswellenachse ausgerichtet ist, wobei das Rotorblatt eine Betriebsstellung aufweist und das Rotorblatt in der Betriebsstellung im Wesentlichen radial zur Antriebswellenachse und radial zur Rotorblattachse ausgerichtet ist und wobei das Rotorblatt eine Lagerstellung aufweist und das Rotorblatt in der Lagerstellung gegenüber der Betriebsstellung um die Rotorblattachse verdreht ist. Das Rotorblatt kann derart drehbar gelagert sein, dass das Rotorblatt in die Lagerstellung einklappbar ist und dass das Rotorblatt bspw. in Folge der durch die Rotation der Rotornabe bewirkten Fliehkraft in die Betriebsstellung bringbar ist.

Dass die Rotorblattachse im Wesentlichen parallel zur Antriebswellenachse ausgerichtet ist, bedeutet im Rahmen des beschriebenen Ausführungsbeispiels, dass die Achsen einen Versatz von höchsten 5°, bevorzugt höchstens 1° und besonders bevorzugt nicht mehr als 0,1° zueinander aufweisen.

Drehbar gelagerte Rotorblätter haben den Vorteil, dass sie bei Nichtgebrauch in eine Lagerstellung eingeklappt und dadurch platzsparend untergebracht werden können. Diese Anordnung eröffnet zudem die Möglichkeit, dass die Rotorblätter vor dem Flugbetrieb nicht manuell in die Betriebsstellung gebracht werden müssen, sondern sich in Folge der Fliehkraft selbst in die Betriebsstellung bringen.

Beim Start kann es durch die Trägheit der Rotorblätter jedoch zu einem Überdrehen der Rotorblätter kommen, sodass diese aus der jeweiligen Lagerstellung über die Betriebsstellung hinaus weitergedreht werden. Bei entsprechenden Beschleunigungen wird das Überdrehen erst durch das Anschlagen des Rotorblatts an der Rotornabe begrenzt. Je nach Ausgestaltung der Rotornabe kann das Anschlagen des Rotorblatts an der Rotornabe zu Beschädigungen an diesen beiden Bauteilen führen. In ungünstigen Fällen entsteht dadurch am Rotorblatt eine Einkerbung, an der sich der Rotor verkanten kann, wodurch eine Ausrichtung der Rotorblätter in die Betriebsstellung gestört oder gar verhindert wird.

Gemäß einer weiteren vorteilhaften Ausführung der vorliegenden Erfindung ist eine Arretierungsvorrichtung vorgesehen, um die Rotorblätter in der Betriebsstellung oder in der Lagerstellung zu halten. Die Arretierungsvorrichtung ist an der Rotornabe und an den Rotorblättern vorgesehen. Die Arretierungsvorrichtung umfasst beispielsweise eine Aussparung an der Rotornabe und ein noppenartiges Element am Rotorblatt. Die Aussparung kann beispielsweise als Bohrung zwischen der Rotorachse und der Rottorblattachse an der Rotornabe angeordnet sein. Die Aussparung kann auch als Ausnehmung auf der gegenüberliegenden Seite der Rotorachse, zum Rotorblatt hin, an der Rotornabe angeordnet sein. Dabei kann das Rotorblatt über ein erhabenes bzw. noppenartiges Element verfügen. Das noppenartige Element ist am Rotorblatt am rotornabennahen Ende angeordnet. Die Aussparung und das noppenartige Element wirken formschlüssig zusammen und halten das Rotorblatt in der Betriebsstellung. Durch Einrasten des noppenartigen Elements und der Aussparung ineinander ist das Rotorblatt zur Rotornabe in der Betriebsstellung fixiert, kann aber mit entsprechender Kraft wieder gelöst und bspw. in die Lagerstellung gefaltet werden. Durch diese Arretierungsvorrichtung ist einerseits das Ausklappen und eine Fixierung in einer geeigneten Position, sowie das Einklappen der Rotorblätter in die Lagerstellung möglich. Somit ist, durch den Einsatz von drehbar gelagerten Rotorblättern, die bei Nichtgebrauch in eine Lagerstellung eingeklappt bzw. gefaltet werden, eine platzsparende Unterbringung der Rotorblätter möglich.

Gemäß einer weiteren vorteilhaften Ausführung der vorliegenden Erfindung ist eine weitere Ausführungsform der Arretierungsvorrichtung vorgesehen. Die Arretierungsvorrichtung besteht bspw. aus einem gegen das Rotorblatt schmalzulaufenden Ende der Rotornabe. Das Rotorblatt verfügt über mindestens zwei erhabene bzw. noppenartige Elemente, welche in einer Betriebsstellung an den Flächen des schmalzulaufenden Endes der Rotornabe anliegen. Diese noppenartigen Elemente umschließen das schmal zulaufende Ende der Rotornabe beidseitig und erzielen somit einen Einrasteffekt der Rotorblätter in der Betriebsstellung, welcher mit entsprechender Kraft wieder gelöst werden kann. Durch diese Arretierungsvorrichtung ist einerseits das Ausklappen und Fixieren in der Betriebsstellung, sowie das Einklappen bzw. Falten der Rotorblätter in die Lagerstellung, bei Nichtgebrauch möglich.

Gemäß einer besonders vorteilhaften Ausführung der vorliegenden Erfindung ist daher vorgesehen, dass das Rotorblatt eine erste Rotordrehrichtung um die Rotorblattachse und eine der ersten Rotordrehrichtung entgegengesetzte zweite Rotordrehrichtung aufweist, und dass das Rotorblatt ein rotornabennahes Ende und ein rotornabenfernes Ende aufweist und wobei die Rotornabe eine Anschlagfläche aufweist, die mit dem rotornabennahen Ende des Rotorblatts derart zusammenwirkt, dass eine Auslenkung des Rotorblatts in die zweite Rotordrehrichtung auf höchstens 90° und vorzugsweise auf höchstens 85° gegenüber der Betriebsstellung des Rotorblatts begrenzt.

Die Ausbildung der Anschlagfläche sorgt dafür, dass die Rotorblätter beim Überdrehen durch einen definierten Anschlag gestoppt werden, wobei der Kontakt zwischen der Anschlagfläche und dem rotornabennahen Ende des Rotorblatts derart eingerichtet ist, dass die beiden Bauteile keinen Schaden nehmen. Das rotornabennahe Ende des Rotorblatts meint den Bereich des Rotorblatts, der im verbauten Zustand näher zur Rotornabe liegt, das rotornabenferne Ende entsprechend den anderen, weiter von der Rotornabe entfernt liegenden, Bereich. Die Ausbildung der Anschlagfläche ist also essenziell für einen sicheren Betrieb der erfindungsgemäßen Rotornabe.

Gemäß einer weiteren vorteilhaften Ausführung der vorliegenden Erfindung ist die Anschlagfläche derart eingerichtet, dass eine Auslenkung des Rotorblatts in die zweite Rotordrehrichtung von zumindest 75° und vorzugsweise von zumindest 80° gegenüber der Betriebsstellung des Rotorblatts zugelassen wird.

Die Anschlagfläche lässt das Einklappen des Rotorblatts in eine Lagerstellung auch in die zweite Rotordrehrichtung zu. Die Bewegung des Rotorblatts in die erste Rotordrehrichtung wird durch die Anschlagfläche nicht eingeschränkt, sodass der maximale Verdrehwinkel des Rotorblatts um die Rotorblattachse und relativ zur Betriebsstellung in die erste Rotordrehrichtung größer ist als in die zweite Rotordrehrichtung.

Es kann von Vorteil sein, beim Nichtbetreiben der Baugruppe die Rotorblätter derart zu schwenken, dass sie annähernd parallel zueinander ausgerichtet sind, um so die Baugruppe platzsparend lagern zu können. Dafür ist es notwendig, dass den Rotorblättern in beiden Rotordrehrichtungen ausreichend Auslenkung ermöglicht wird.

Der besondere Vorzug der beschriebenen Ausführungsform der Rotornabe liegt also darin, mittels der Anschlagfläche einen sicheren Kontakt zwischen Rotornabe und Rotorblatt beim Überdrehen des Rotorblatts sicherzustellen und gleichzeitig ausreichend Verdrehfreiheit des Rotorblatts für eine raumsparende Lagerung zu gewährleisten.

Gemäß einer weiteren vorteilhaften Ausführung der vorliegenden Erfindung sind Sensoren zur Erfassung der Rotorposition und/oder der Motortemperatur vorgesehen. Um eine geeignete Position der Rotorblätter im ausgeschalteten Betriebszustand zu gewährleisten, kann mit einem Sensor die genaue Position der Antriebswelle bzw. des Motors bestimmt und die Rotorblätter entsprechend ausgerichtet werden, um diese vor Beschädigung zu schützen. Die Rotorblätter können beispielsweise bei einer Landung eines Flächenflugzeugs durch eine unbeabsichtigte Vertikalstellung der Rotorblätter beschädigt werden, während bei einer Horizontalstellung des Propellers die Rotorblätter geschützt sind. Weiter kann bei einem Multikopter durch die Ausrichtung der Propeller nach der Landung beispielsweise eine automatische Abdeckung des Multikopters in einer Ladestation erfolgen, wobei durch die Ausrichtung der Rotorblätter eine Beschädigung verhindert wird. Der Sensor zur Bestimmung der Rotorposition kann beispielswese ein Hallsensor oder ein optischer Sensor sein. Es ist auch möglich die Position des Rotors mittels der Kommutierungssteuerung zu erfassen. Dabei kann der Rotor aktiv gebremst werden. Bei solcher abrupten Laständerung, ist ein Lösen des Propellers von der Rotornabe möglich, somit ist bei dieser Ausführungsform eine Sicherung der Rotornabe mittels eines O-Rings, welcher formschlüssig mit der Rotornabe und reibschlüssig mit der Antriebswelle verbunden ist, vorteilhaft. Ein Temperatursensor kann vorgesehen sein, um einer Beschädigung des O-Rings entgegenzuwirken. Mittels eines Temperatursensors kann zusätzlich der Zustand des Motors überwacht werden.

Ein Ausführungsbeispiel der vorliegenden Erfindung wird im Folgenden anhand von Zeichnungen näher erläutert.

Es zeigen:
- Fig. 1:: das Schnittbild einer erfindungsgemäßen Rotornabe,
- Fig. 2:: eine perspektivische Ansicht einer erfindungsgemäßen Rotornabe,
- Fig. 3:: das Schnittbild einer Baugruppe
- Fig. 4:: eine erfindungsgemäße Rotornabe mit Rotorblatt,
- Fig. 5:: eine erfindungsgemäße Rotornabe mit zwei Rotorblättern in Betriebsstellung,
- Fig. 6:: eine erfindungsgemäße Rotornabe mit zwei Rotorblättern in Lagerstellung,
- Fig. 7:: eine erfindungsgemäße Rotornabe mit zwei Rotorblättern in Betriebsstellung,
- Fig. 8:: eine Arretierungsvorrichtung eines Rotorblattes an der Rotornabe in einer ersten Ausführungsform,
- Fig. 9:: eine Arretierungsvorrichtung eines Rotorblattes an der Rotornabe in einer zweiten Ausführungsform,
- Fig. 10:: eine Arretierungsvorrichtung eines Rotorblattes an der Rotornabe in einer dritten Ausführungsform,
- Fig. 11:: eine schematische Darstellung einer Baugruppe, welche Sensoren zur Erfassung der Rotorposition und/oder Motortemperatur umfasst.

Für die folgenden Ausführungsformen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen verwiesen.

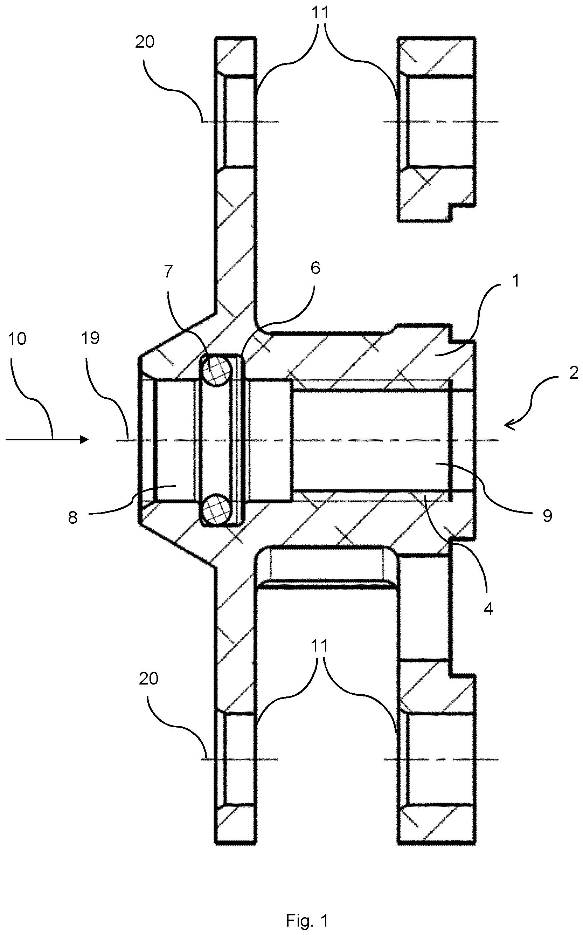

Fig. 1 zeigt das Schnittbild einer erfindungsgemäßen Rotornabe 1 mit einer Bohrung 2. Die Bohrung 2 ist mit einem Innengewinde 4 versehen und weist dazu eine Ringnut 6 auf. Die Ringnut 6 ist im ersten Bohrungsabschnitt 8 ausgebildet, wohingegen das Innengewinde 4 im zweiten Bohrungsabschnitt 9 eingebracht ist. Es ist auch gut zu erkennen, dass die Ringnut 6 und das Innengewinde 4 in axialer Richtung einen Abstand zueinander aufweisen und dass der Innendurchmesser des ersten Bohrungsabschnitts 8 etwas größer ausgeführt ist als der Nenndurchmesser des Innengewindes 4. Des Weiteren weist die hier dargestellte Ausführung der erfindungsgemä-ßen Rotornabe 1 zwei Aufnahmeelemente 11 mit jeweils einer Rotorblattachse 20 für jeweils ein Rotorblatt 12 auf. Zum Verschrauben der erfindungsgemäßen Rotornabe 1 mit einer Antriebswelle 3 ist eine Einschraubrichtung 10 vorgesehen, wobei der erste Bohrungsabschnitt 8 mit der Ringnut 6 in Einschraubrichtung 10 vor dem zweiten Bohrungsabschnitt 9 ausgebildet ist.

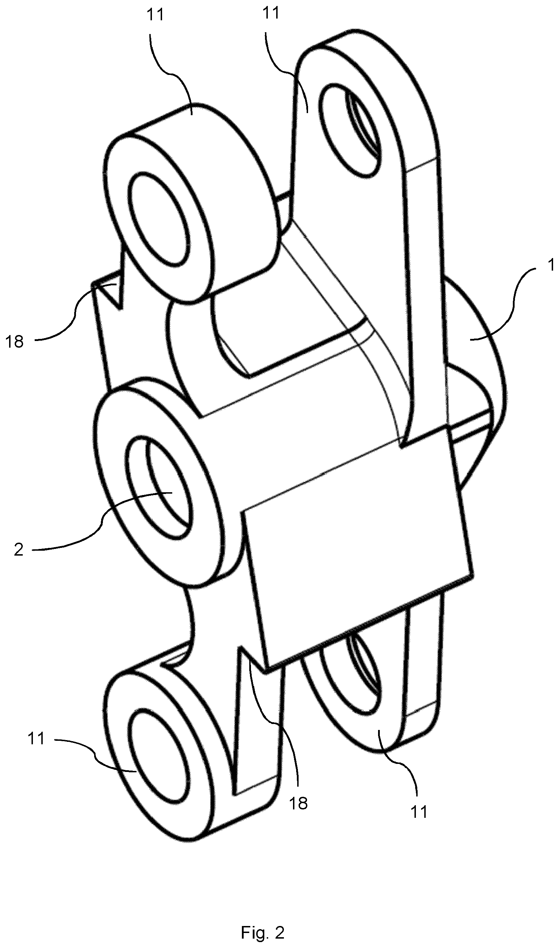

Fig. 2 zeigt eine räumliche Darstellung der erfindungsgemäßen Rotornabe 1. Gut zu erkennen sind die beiden an der erfindungsgemäßen Rotornabe 1 ausgebildeten Anschlagflächen 18.

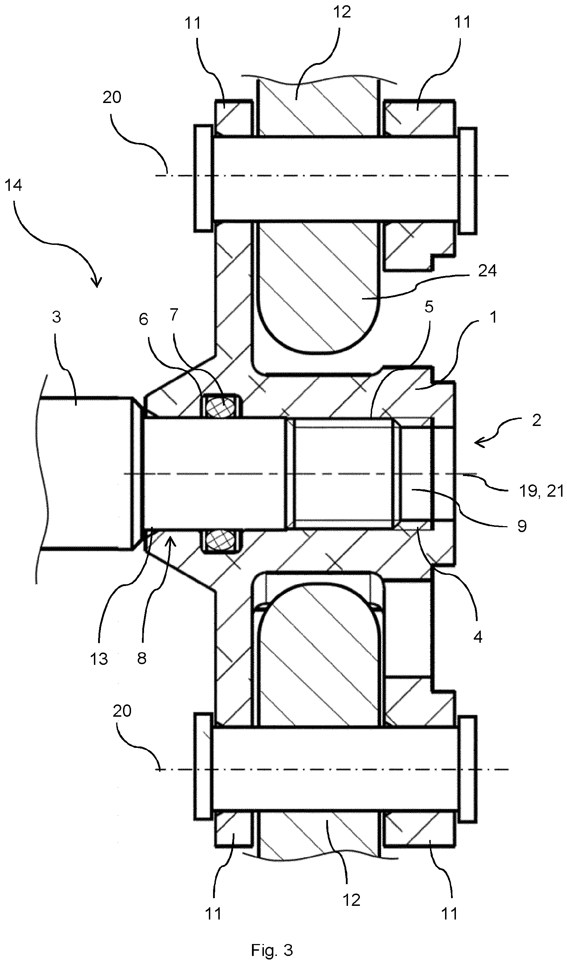

Fig. 3 zeigt eine Baugruppe 14 umfassend die erfindungsgemäße Rotornabe 1, einen O-Ring 7, eine Antriebswelle 3 mit einer Antriebswellenachse 21, die in der gezeigten Ausführung der Rotorachse 19 entspricht, und zwei Rotorblätter 12. Die Antriebswelle 3 ist mit der erfindungsgemä-ßen Rotornabe 1 verschraubt, wobei in der Ringnut 6 der O-Ring 7 verbaut und reibschlüssig mit dem Funktionsabschnitt 13 der Antriebswelle 3 in Kontakt ist. Der erste Bohrungsabschnitt 8 und der Funktionsabschnitt 13 der Antriebswelle bilden eine Spielpassung. In den beiden Aufnahmeelementen 11 ist jeweils ein Rotorblatt 12 drehbar um die Rotorblattachse 20 gelagert. Gut zu erkennen ist, dass die Rotorblattachse 20 parallel zur Rotorachse 21 bzw. parallel zur Antriebswellenachse 19 ausgerichtet ist.

Durch die Ausführung der erfindungsgemäßen Rotornabe 1 ist dank der bestehenden Spielpassung zwischen der Antriebswelle 3 und der Rotornabe 1 eine wiederholgenaue und exakte Montage der Antriebswelle 3 in der Rotornabe 1 möglich. Einen weiteren Beitrag zum sicheren Betrieb leistet der verbaute O-Ring 7, der in jedem Betriebszustand dem Lösen von Rotornabe 1 und Antriebswelle 3 entgegenwirkt.

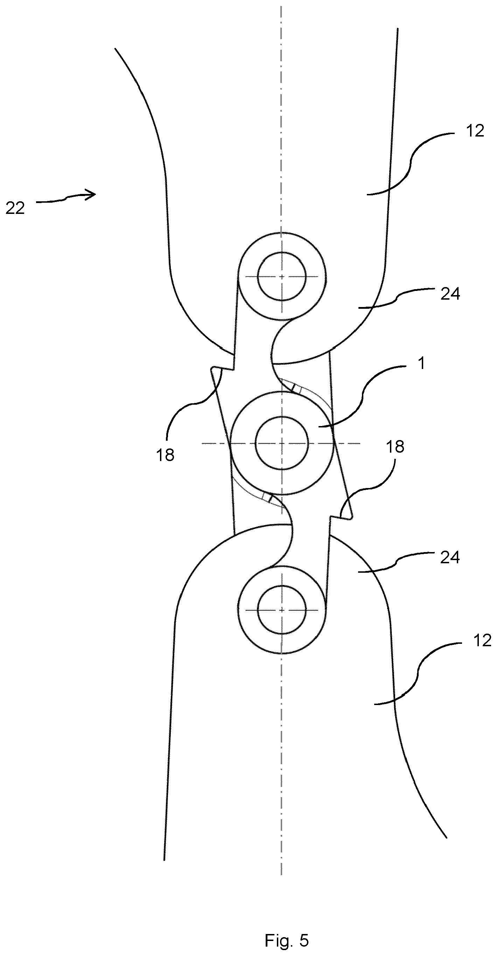

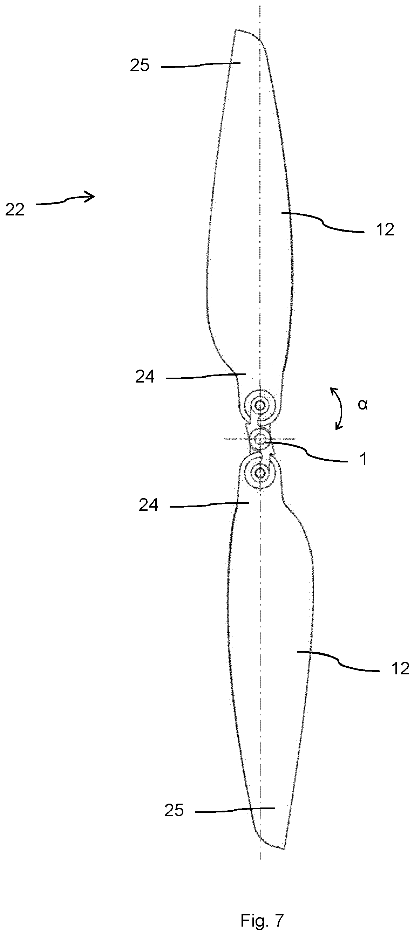

Fig. 5 und Fig. 7 zeigen eine erfindungsgemäße Rotornabe 1 mit zwei Rotorblättern 12 in Betriebsstellung 22. Die Rotorblätter 12 sind zur in die Blattebene zeigenden Antriebswellenachse 21 und Rotorblattachse 20 radial ausgerichtet, wobei die beiden Rotorblätter 12 wiederum annähernd 180° zueinander ausgerichtet sind und in den gezeigten Beispielen vertikal nach oben bzw. vertikal nach unten zeigen. Gut zu erkennen ist auch, dass die Anschlagfläche 18 in der Betriebsstellung 22 nicht mit dem rotornabennahen Ende 24 des Rotorblatts 12 zusammenwirkt.

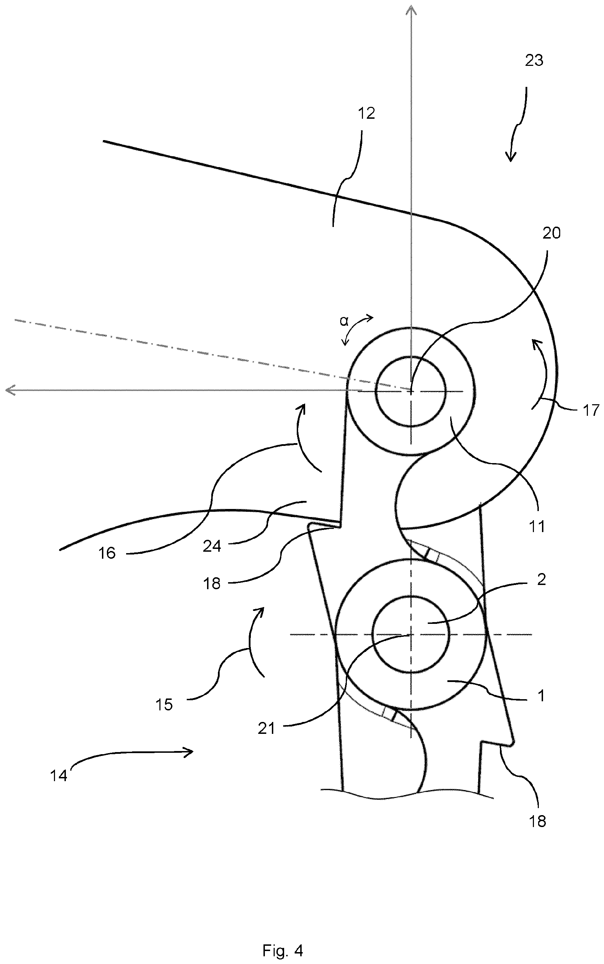

Fig. 4 zeigt das Zusammenwirken der Anschlagfläche 18 mit dem rotornabennahen Ende 24 des Rotorblatts 12. Diese Situation entsteht beispielsweise bei einer Beschleunigung der Rotornabe 1 um die Rotorachse 19. Die Rotornabe 1 dreht sich dann in die Rotornabendrehrichtung 15 und das Rotorblatt 12 aufgrund seiner Trägheit dreht sich in Richtung der zweiten Rotordrehrichtung 17, wobei das rotornabennahe Ende 24 des Rotorblatts 12 auf die Anschlagfläche 18 trifft und von dieser an einem Überdrehen gehindert wird. Der Verdrehwinkel der Rotornabe α relativ zur Betriebsstellung 22 beträgt in der gezeigten Ausführung ungefähr 80°.

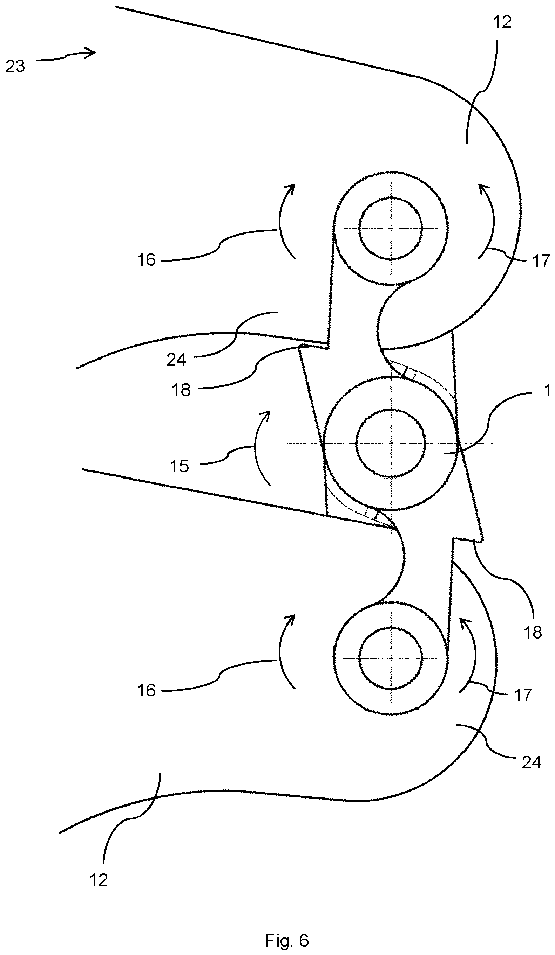

Ein weiteres Beispiel für das Anstehen bzw. Anliegen des rotornabennahen Endes 24 an der Anschlagfläche 18 ist in Fig. 4 dargestellt. Es kann von Vorteil sein, wenn beide Rotorblätter 12 in der Lagerstellung 23 parallel zueinander ausgerichtet werden. In dieser gefalteten Position können Rotorblätter platzsparend gelagert werden, gleichzeitig ist der Rotor schnell wieder einsetzbar. Dazu ist es notwendig, dass beide Rotorblätter 12 in beide Rotordrehrichtungen 16, 17 eine ausreichende Verdrehfreiheit aufweisen. Eines der Rotorblätter 12, im dargestellten Beispiel das obere, wird in die zweite Rotordrehrichtung 17 gedreht, wohingegen das jeweils andere Rotorblatt 12, im dargestellten Beispiel das untere, in die erste Rotordrehrichtung 16 gedreht wird. Es ist auch gut zu erkennen, dass aufgrund der Ausbildung der Rotornabe 1 und insbesondere aufgrund der Anlagefläche 18 der Verdrehwinkel α in die erste Rotordrehrichtung 16 größer ist als in die zweite Rotordrehrichtung 17. Dadurch könnte eine parallele Ausrichtung der beiden Rotorblätter 12 auch dadurch erreicht werden, dass das in der Darstellung in Fig. 6 obere Rotorblatt 12 einen kleineren Verdrehwinkel α aufweist und folglich nicht mehr an der Anschlagfläche 18 anliegt, und gleichzeitig das in Fig. 6 untere Rotorblatt 12 in die erste Rotordrehrichtung 16 noch weiter ausgelenkt wird, bis beide Rotorblätter 12 annähernd parallel zueinander ausgerichtet sind.

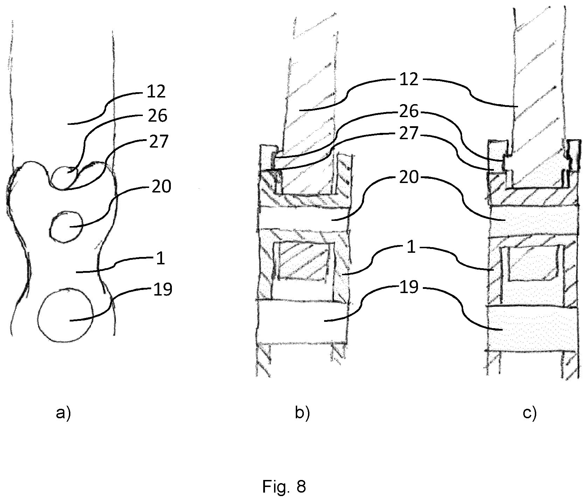

Die Fig. 8-10 zeigen Arretierungsvorrichtungen eines Rotorblattes 12 an der Rotornabe 1 in verschiedenen Ausführungsformen. Durch eine Arretierungsvorrichtung werden die Rotorblätter 12 in einer definierten Position zu der Rotornabe 1 ausgerichtet. Die Arretierungsvorrichtung kann verschiedenartig ausgestaltet sein. Die Arretierungsvorrichtung weist beispielsweise ein noppenartiges Element 26 und eine Aussparung 27 auf. Die Arretierungsvorrichtung kann auch eine Ausbuchtung 28 und zwei noppenartige Elemente 26 aufweisen. Bei allen Ausführungsformen wird das Rotorblatt 12 durch die Arretierungsvorrichtung in einer Betriebsstellung 22 gehalten. Mit einer gewissen Kraft tangential zu der Rotorblattachse 20 lässt sich das Rotorblatt 12 in die Lagerstellung falten. Dabei können die Arretierungsvorrichtungen derart ausgebildet bzw. angeordnet sein, dass die Rotorblätter 12 gegenüber der Rotornabe 1 in der Lagerstellung ebenfalls gehalten werden.

In Fig. 8a-c ist eine erste Ausführungsform einer Arretierungsvorrichtung dargestellt. Die Arretierungsvorrichtung weist eine Aussparung 27 an der Rotornabe 1 auf. Die Aussparung 27 ist eine Ausnehmung. Auf einer Geraden, welche durch das Zentrum der Rotorachse 19 und der Rotorblattachse 20 verläuft, hat die Ausnehmung an der Rotornabe 1 ihre tiefste Stelle. Wenn sich das Rotorblatt 12 in der Betriebsstellung 22 befindet, weist das Rotorblatt 12 an derselben Stelle, an welcher sich die Ausnehmung bei der Rotornabe 1 befindet, ein noppenartiges Element 26 auf. Figur 8a zeigt die Arretierungsvorrichtung in einer Draufsicht. Figur 8b und c in einer seitlichen Schnittansicht, wobei in Figur 8b das Rotorblatt 12 nur auf der einen Seite ein noppenartiges Element 26 aufweist, während das Rotorblatt 12 in der Figur 8c auf beiden Seiten des Querschnitts durch das Rotorblatt 12 ein noppenartiges Element 26 aufweist.

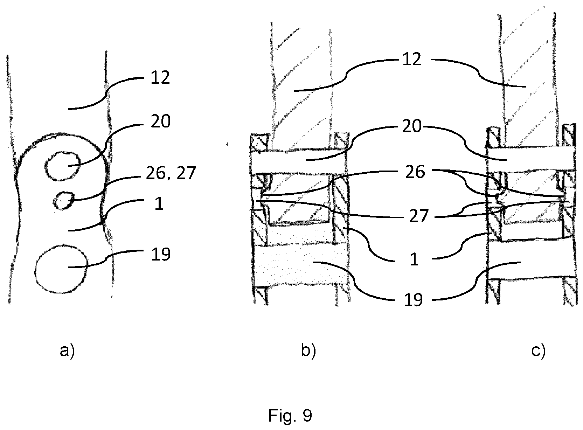

Figur 9a-c zeigt eine zweite Ausführungsform einer Arretierungsvorrichtung in einer Draufsicht und in zwei seitlichen Schnittansichten, wobei in Figur 9b das Rotorblatt 12 nur auf der einen Seite ein noppenartiges Element 26 aufweist, während das Rotorblatt 12 in der Figur 9c auf beiden Seiten des Querschnitts durch das Rotorblatt 12 ein noppenartiges Element 26 aufweist. Bei der in Figur 9 gezeigten zweiten Ausführungsform ist das noppenartige Element 26 zwischen der Rotorachse 19 und der Rotorblattachse 20 angeordnet. Die Aussparung 27 an der Rotornabe 1 ist als Bohrung in der Rotornabe 1 ausgeführt.

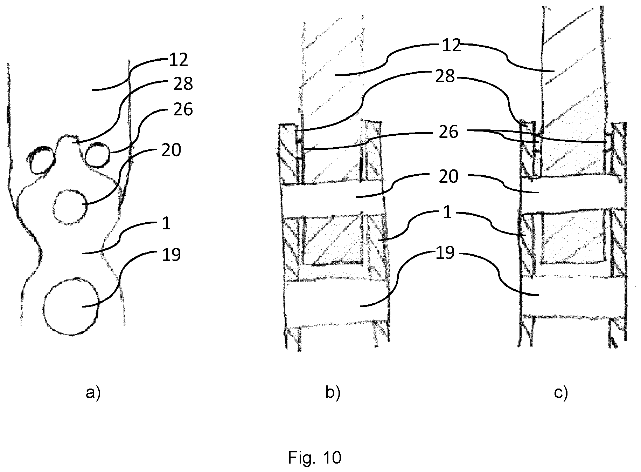

Figur 10a-c zeigt eine dritte Ausführungsform einer Arretierungsvorrichtung in einer Draufsicht und in zwei seitlichen Schnittansichten. Dabei weist in Figur 10b die Rotornabe 1 nur auf einer Seite eine Ausbuchtung 28 in Form eines schmal zulaufenden Endes auf, während die Rotornabe 1 in der Figur 10c auf beiden Seiten des Querschnitts durch die Rotornabe 1 die Ausbuchtung 28 in Form eines schmal zulaufenden Endes aufweist. Die Ausbuchtung 28 liegt auf einer Geraden, welche auf der Rotornabe 1 durch das Zentrum der Rotorachse 19 und der Rotorblattachse 20 verläuft. Wenn sich das Rotorblatt 12 in der Betriebsstellung befindet, weist das Rotorblatt 12 zu beiden Seiten der Ausbuchtung 28 der Rotornabe 1 je ein noppenartiges Element 26 auf.

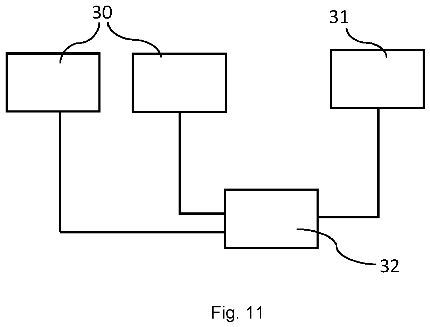

Figur 11 zeigt eine schematische Darstellung eines Teils einer Baugruppe 14, welcher Sensoren zur Erfassung der Rotorposition 30 und/oder der Motortemperatur 31 umfasst. Die Sensoren zur Erfassung der Rotorposition 30 können bspw. Hallsensoren oder optische Sensoren sein. Die Sensoren 30, 31 können mit einer Steuerung 32 für den Motor der Antriebswelle 3 oder der Steuerung 32 des Luftfahrzeugs verbunden sein. In der Steuerung 32 können weitere relevante Signale und Informationen für den Betrieb des Luftfahrzeugs verarbeitet werden.

Die Positionssensoren 30 können bspw. die Position eines Rotorantriebes wie bspw. eines Elektromotors erfassen und bspw. in den Elektromotor bzw. Motor integriert sein. Die Positionssensoren 30 können auch die Position der Antriebswelle 3 und/oder der Rotornabe 1 und/oder der Rotorblätter 12 erfassen. Durch die Positionssensoren 30 können bspw. bei einem Flächenflugzeug die Rotorblätter 12 beim Landen in eine horizontale Position gebracht bzw. in einer horizontalen Lage angehalten werden. Dadurch können die Rotorblätter 12 beim Landen vor Bodenkontakt geschützt werden. Dabei müssen die Rotorblätter 12 in einer bestimmten vorgegebenen Position angehalten werden. Durch den O-Ring 7 in der Rotornabe 1 wird dabei verhindert, dass sich durch ein schnelles, abruptes Abbremsen der Antriebswelle 3 in der bestimmten Position die Rotornabe 1 von der Antriebswelle 3 löst. Der Temperatursensor 31 kann ferner beispielsweise Informationen zum Betriebszustand des Motors liefern, wodurch bspw. festgestellt werden kann, ob ein Landen des Luftfahrzeuges angebracht oder notwendig ist.

### Bezugszeichenliste:

- 1: Rotornabe
- 2: Bohrung
- 3: Antriebswelle
- 4: Innengewinde
- 5: Außengewinde
- 6: Ringnut
- 7: O-Ring
- 8: erster Bohrungsabschnitt
- 9: zweiter Bohrungsabschnitt
- 10: Einschraubrichtung
- 11: Aufnahmeelement
- 12: Rotorblatt
- 13: Funktionsabschnitt
- 14: Baugruppe
- 15: Rotornabendrehrichtung
- 16: erste Rotordrehrichtung
- 17: zweite Rotordrehrichtung
- 18: Anschlagfläche
- 19: Rotorachse
- 20: Rotorblattachse
- 21: Antriebswellenachse
- 22: Betriebsstellung des Rotorblatts
- 23: Lagerstellung des Rotorblatts
- 24: rotornabennahes Ende des Rotorblattes im gefalteten Zustand
- 25: rotornabenfernes Ende des Rotorblattes im gefalteten Zustand
- 26: noppenartiges Element
- 27: Aussparung
- 28: Ausbuchtung
- 30: Rotorpositionssensor
- 31: Temperatursensor
- 32: Steuerung
- α: Verdrehwinkel Rotorblatt

## Patentansprüche

1. Rotornabe (1), insbesondere für Luftfahrzeuge mit Propellerantrieb, aufweisend eine Bohrung (2) zur Aufnahme einer Antriebswelle (3), wobei die Bohrung (2) ein Innengewinde (4) umfasst, das eingerichtet ist, mit einem Außengewinde (5) der Antriebswelle (3) zusammenzuwirken und die Rotornabe (1) lösbar mit der Antriebswelle (3) zu verbinden, **dadurch gekennzeichnet, dass** die Bohrung (2) eine Ringnut (6) aufweist zur Aufnahme eines O-Rings (7), der geeignet ist, eine Relativbewegung zwischen der Rotornabe (1) und der Antriebswelle (3) zu hemmen.

2. Rotornabe (1) nach Anspruch 1, **dadurch gekennzeichnet, dass** die Bohrung (2) einen ersten Bohrungsabschnitt (8) aufweist, wobei der erste Bohrungsabschnitt (8) die Ringnut (6) umfasst und dass die Bohrung (2) einen zweiten Bohrungsabschnitt (9) aufweist, wobei der zweite Bohrungsabschnitt (9) das Innengewinde (4) umfasst und wobei der Innendurchmesser des ersten Bohrungsabschnitts (8) größer ist als der Nenndurchmesser des Innengewindes (4).

3. Rotornabe (1) nach einem der Ansprüche 1 oder 2, **dadurch gekennzeichnet, dass** die Ringnut (6) und das Innengewinde (4) in axialer Richtung beabstandet voneinander ausgeführt sind.

4. Rotornabe (1) nach einem der Ansprüche1 bis 3, **dadurch gekennzeichnet, dass** die Bohrung (2) eine Einschraubrichtung (10) aufweist und dass die Ringnut (6) in Einschraubrichtung (10) vor dem Innengewinde (4) angeordnet ist.

5. Rotornabe (1) nach einem der Ansprüche 1 bis 4, **dadurch gekennzeichnet, dass** die Rotornabe (1) eine Propellernabe ist und zumindest ein Aufnahmeelement (11) zur Befestigung eines Rotorblatts (12) aufweist.

6. Baugruppe (14) umfassend eine Rotornabe (1) nach einem der Ansprüche 1 bis 5, einen O-Ring (7), wobei der O-Ring (7) in der Ringnut (6) angeordnet ist, eine Antriebswelle (3), wobei die Antriebswelle (3) eine Antriebswellenachse (21) und ein Außengewinde (5) aufweist, das eingerichtet ist, mit dem Innengewinde (4) der Rotornabe (1) zusammenzuwirken und die Antriebswelle (3) mit der Rotornabe (1) lösbar zu verbinden.

7. Baugruppe (14) nach Anspruch 6, **dadurch gekennzeichnet, dass** die Ringnut (6) der Rotornabe (1) eine Breite und eine Tiefe aufweist und dass der O-Ring (7) derart ausgelegt und in der Ringnut (6) positioniert ist, im verbauten Zustand die Rotornabe (1) und die Antriebswelle (3) reibschlüssig in Kontakt zu bringen.

8. Baugruppe (14) nach Anspruch 6 oder 7, **dadurch gekennzeichnet, dass** die Antriebswelle (3) einen Funktionsabschnitt (13) umfasst, der mit dem ersten Bohrungsabschnitt (8) der Rotornabe (1) eine Spielpassung oder eine Übergangspassung bildet.

9. Baugruppe (14) nach einem der Ansprüche 6 bis 8, **dadurch gekennzeichnet, dass** die Rotornabe (1) eine Rotorachse (19) und eine dem angetriebenen Zustand entsprechende Rotornabendrehrichtung (15) um die Rotorachse (19) aufweist und dass die Gewinderichtung von Rotornabe (1) und Antriebswelle (3) derart ausgelegt ist, dass bei einer Beschleunigung durch ein Antriebssystem in die Rotornabendrehrichtung (15) die Rotornabe (1) auf der Antriebswelle (3) festgezogen wird.

10. Baugruppe (14) nach einem der Ansprüche 6 bis 9, **dadurch gekennzeichnet, dass** der O-Ring (7) aus einem Polymer besteht.

11. Baugruppe (14) nach einem der Ansprüche 6 bis 10, **dadurch gekennzeichnet, dass** die Baugruppe (14) zumindest ein Rotorblatt (12) umfasst, das drehbar um eine Rotorblattachse (20) im Aufnahmeelement (11) gelagert ist, wobei die Rotorblattachse (20) im Wesentlichen parallel zur Antriebswellenachse (21) ausgerichtet ist, wobei das Rotorblatt (12) eine Betriebsstellung (22) aufweist und das Rotorblatt (12) in der Betriebsstellung (22) im Wesentlichen radial zur Antriebswellenachse (21) und radial zur Rotorblattachse (20) ausgerichtet ist und wobei das Rotorblatt (12) eine Lagerstellung (23) aufweist und das Rotorblatt (12) in der Lagerstellung (23) gegenüber der Betriebsstellung (22) um die Rotorblattachse (20) verdreht ist.

12. Baugruppe (14) nach einem der Ansprüche 6 bis 11, **dadurch gekennzeichnet, dass** eine Arretierungsvorrichtung vorgesehen ist, um die Rotorblätter in der Betriebsstellung (22) oder in der Lagerstellung (23) zu halten.

13. Baugruppe (14) nach einem der Ansprüche 6 bis 12, **dadurch gekennzeichnet, dass** das Rotorblatt (12) eine erste Rotordrehrichtung (16) um die Rotorblattachse (20) und eine der ersten Rotordrehrichtung (16) entgegengesetzte zweite Rotordrehrichtung (17) aufweist, und dass das Rotorblatt (12) ein rotornabennahes Ende (24) und ein rotornabenfernes Ende (25) aufweist und wobei die Rotornabe (1) eine Anschlagfläche (18) aufweist, die mit dem rotornabennahen Ende (24) des Rotors (12) derart zusammenwirkt, dass eine Auslenkung des Rotorblatts (12) in die zweite Rotordrehrichtung (17) auf einen Winkel α von höchstens 90° und vorzugsweise auf höchstens 85° gegenüber der Betriebsstellung (22) des Rotorblatts (12) begrenzt.

14. Baugruppe (14) nach einem der Ansprüche 6 bis 13, **dadurch gekennzeichnet, dass** die Anschlagfläche (18) derart eingerichtet ist, dass eine Auslenkung des Rotorblatts (12) in die zweite Rotordrehrichtung (17) von zumindest 75° und vorzugsweise von zumindest 80° gegenüber der Betriebsstellung (22) des Rotorblatts (12) zugelassen wird.

15. Baugruppe (14) nach einem der Ansprüche 6 bis 14, **dadurch gekennzeichnet, dass** die Baugruppe (14) mindestens einen Rotorpositionssensor (30) zur Erfassung der Rotorposition und/oder einen Temperatursensor (31) zur Erfassung der Motortemperatur umfasst.
